# EUROPEAN PATENT SPECIFICATION

(11) **EP 4 434 735 B1**
(45) Date of publication and mention of the grant of the patent: **17.06.2026**
(21) Application number: 24163136.5
(22) Date of filing: 13.03.2024
(51) Int. Cl.: B29C 73/16, B29L 30/00

(54) **HIGH PERFORMING LOW-VISCOSITY TIRE SEALANT**
HOCHLEISTUNGSREIFENDICHTMITTEL MIT GERINGER VISKOSITÄT
PRODUIT D'ÉTANCHÉITÉ DE PNEU À FAIBLE VISCOSITÉ ET À HAUTE PERFORMANCE

(30) Priority: 20.03.2023 US 202363453345 P; 11.03.2024 US 202418601581
(43) Date of publication of application: 25.09.2024
(73) Proprietor: Illinois Tool Works Inc., Glenview IL 60025 (US)
(72) Inventor: WARREN, Jade, Glenview 60025 (US)
(74) Representative: HGF

(56) References cited:
- US-A1- 2010 222 455
- US-A1- 2018 304 564

## Description

### BACKGROUND

The present disclosure relates to a tire-sealing agent. For the average motorist, replacing a tire on the side of the road can be daunting and needlessly exposes the motorist to inherent roadside dangers.

One solution to an emergency flat tire repair is to use an aerosol sealant dispenser that combines a chemical fluid and a propellant. These are usually contained in a can or other type of container. A tube is attached between the can and a tire via a tire valve stem. The fluid is propelled through the valve stem into the tire and forms a seal (e.g., through shear-induced crystallization). This forms a repair of the tire. To enhance the seal, a compressed air source can be used to allow proper and safe inflation of the tire. An example integrated compressor-tire sealant injection device with a large mouth sealant container is described in commonly-owned U.S. Patent No. 6,789,581 to David Cowan et al. and commonly-owned U.S. Patent No. 7,798,183 to James Cegelski and Scott Noble Hickman.

An example of a puncture sealing agent for a tire is described in commonly-owned U.S. Patent No. 7,868,061 to Steven Cegelski and Shees Sulemenji, which includes a rubber latex as part of the two-part composition. Another example of a tire sealant is described in U.S. Patent No. 5,364,463 to Jack L. Hull, which requires removal of the valve core in order to apply the sealant. US2018304564A1 relates to sealant compositions for sealing punctures in pneumatic tires and in particular to particle-based through-the valve core sealant compositions for the temporary sealing of punctures in the extreme outer shoulder edge of pneumatic tires, which sealing effectiveness is controlled to begin to diminish after a certain further distance has been travelled.

Despite existing solutions, it is desirable to provide a tire-sealing agent that is latex-free, can be used as an aerosol, has a low viscosity, can be administered to a tire without removal of the valve core, and has a composition that allows for easy clean-up.

### SUMMARY

The present disclosure relates generally to a tire-sealing agent substantially as illustrated by and described in connection with at least one of the figures, as set forth more completely in the claims.

### DRAWINGS

The foregoing and other objects, features, and advantages of the devices, systems, and methods described herein will be apparent from the following description of particular examples thereof, as illustrated in the accompanying figures; where like or similar reference numbers refer to like or similar structures. The figures are not necessarily to scale, emphasis instead being placed upon illustrating the principles of the devices, systems, and methods described herein.
Figure 1 illustrates a tire repair aerosol canister using a composition in accordance with an aspect of this disclosure being used to seal and/or inflate a tire.
Figure 2 illustrates a table of ingredients for a tire-sealing agent in accordance with an aspect of this disclosure.

### DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein are not intended to be limiting, referring instead individually to any and all values falling within and/or including the range, unless otherwise indicated herein, and each separate value within such a range is incorporated into the specification as if it were individually recited herein. In the following description, it is understood that terms such as "first," "second," "top," "bottom," "side," "front," "back," "upper," "lower," and the like are words of convenience and are not to be construed as limiting terms. For example, while in some examples a first side is located adjacent or near a second side, the terms "first side" and "second side" do not imply any specific order in which the sides are ordered.

The terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the disclosure. The use of any and all examples, or exemplary language ("e.g.," "such as," or the like) provided herein, is intended merely to better illuminate the disclosed examples and does not pose a limitation on the scope of the disclosure. The terms "e.g.," and "for example" set off lists of one or more non-limiting examples, instances, or illustrations. No language in the specification should be construed as indicating any unclaimed element as essential to the practice of the disclosed examples.

The term "and/or" means any one or more of the items in the list joined by "and/or." As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z."

A tire-sealing agent is a material that can be injected, poured, inserted, or otherwise introduced into a tire in order to repair a puncture in the tire. The puncture sealing agent, which is initially in liquid form, seeps into the puncture and ultimately solidifies to seal the puncture in the tire.

Despite advancements to date, there exists a need for a low-viscosity aerosolizable tire-sealing agent that has no latex content, thus allowing for easy application and cleanup. In accordance with aspects of this disclosure, the tire-sealing agent is a one-part system comprising water, a glycol compound, clay, microfibrillated cellulose, and a binder has a low viscosity and is able to be aerosolized. Several examples of a tire-sealing agent in accordance with aspects of this disclosure are described herein. However, the disclosure is not limited to the particular examples and embodiments described as changes may be made to the examples without departing from the scope of the subject disclosure.

Disclosed is a tire-sealing agent. In one example, a tire-sealing agent comprises: water, a glycol compound, clay, microfibrillated cellulose, and a binder. In some examples, the tire-sealing agent further comprises one or more of an adhesion agent, an anti-corrosive agent, a filler material, and/or a biocide. In some examples, the binder is selected from a group consisting of: carboxymethyl cellulose; hydroxyethyl cellulose; hydroxyl propyl cellulose; Xanthan gum; Guar gum; and an alkali swellable emulsion ("ASE"). In some examples, the binder is carboxymethyl cellulose. The tire-sealing agent, when aerosolized, can produce a stable foam that can be administered to a tire without removal of the valve stem's valve core. In further aspects, the tire-sealing agent is a one-part system that is shear-thinning (*i.e.,* thixotropic) and has a low viscosity (*e.g.,* between approximately 150 and approximately 500 cps).

The water can be deionized ("DI") water or non-deionized ("non-DI") water, which can be selected to address sourcing and control-related needs. For example, non-DI water can be processed in a wider range of facilities (e.g., those without sufficient access to DI water); however, DI water offers increased control on batch-to-batch variation. In one example, the tire-sealing agent comprises between approximately 50% and approximately 90% of water by weight. In another example, the tire-sealing agent comprises between approximately 70% and 85% of water by weight.

The glycol compound can be glycerin, ethylene glycol, or propylene glycol. According to the invention, the tire-sealing agent comprises between approximately 1% and approximately 30% glycol compound by weight. In another example, the tire-sealing agent comprises between 1% and approximately 20% glycol compound by weight. In yet another example, the tire-sealing agent comprises between approximately 2% and approximately 10% glycol compound by weight.

The clay can be an ultra-fine clay. For example the clay can be selected from a group consisting of: Attapulgite clay; Bentonite clay; and Hectorite clay. According to the invention, the tire-sealing agent comprises between approximately 1% and approximately 30% clay by weight. In another example, the tire-sealing agent comprises between approximately 5% and approximately 15% clay by weight. Testing has demonstrated that the percent of clay by weight can be selected depending on the other materials and concentrations employed in the composition. For example, a tire-sealing agent comprising between approximately 7% and approximately 15% clay by weight is advantageous in a tire-sealing agent with approximately 0 to 5% glycol by weight. In another example, a tire-sealing agent comprising between approximately 7% and approximately 10% clay by weight is advantageous with a Hegman fineness of grind greater than 5 (in dioctyl phthalate), whereas approximately 10% and approximately 15% clay by weight is advantageous with a Hegman fineness of grind greater than 6 (in dioctyl phthalate).

The adhesion agent can be selected from a group consisting of: a terpene resin dispersion; a phenolic resin dispersion; a modified aliphatic hydrocarbon resin dispersion; a polyvinyl ester; a polyvinyl alcohol; and a polyvinyl pyrrolidine. In one example, the tire-sealing agent comprises up to or less than approximately 10% by weight of the adhesion agent. In another example, the tire-sealing agent comprises between less than approximately 5% by weight of the adhesion agent.

The anti-corrosive agent can be selected from a group consisting of: a phosphate ester and 2-mercaptobenzothiazol. In one example, the tire-sealing agent comprises between approximately 0.01% and approximately 5% by weight of the anti-corrosive agent. In another example, the tire-sealing agent comprises between approximately 0.1% and 2% by weight of the anti-corrosive agent.

The filler material can be a cellulose-based fiber. In one example, the tire-sealing agent comprises between approximately 0.01% and 2% by weight of the filler material. In another example, the tire-sealing agent comprises between approximately 0.1% and 1% by weight of the filler material.

According to the invention, tire-sealing agent comprises between approximately 0.01% and approximately 2% by weight of microfibrillated cellulose by weight. In some examples, the tire-sealing agent comprises between approximately 0.35% and approximately 0.5% by weight of microfibrillated cellulose. Using microfibrillated cellulose yields a number of advantages. For example, microfibrillated cellulose exhibits high available surface area with functional OH-groups, its fibril network provides structure that is robust to pH, salt, and temperature, and it exhibits beneficial film-forming characteristics.

According to the invention, the tire-sealing agent comprises between 0.01% and 2% by weight of the binder. In some examples, the tire-sealing agent comprises between approximately 0.1% and 1% by weight of the binder.

In some examples, the tire-sealing agent comprises between approximately 0.01% and 1% by weight of the biocide. In some examples, the tire-sealing agent comprises between approximately 0.01% and 0.25% by weight of the biocide. According to the invention, the tire-sealing agent does not comprise any rubber latex.

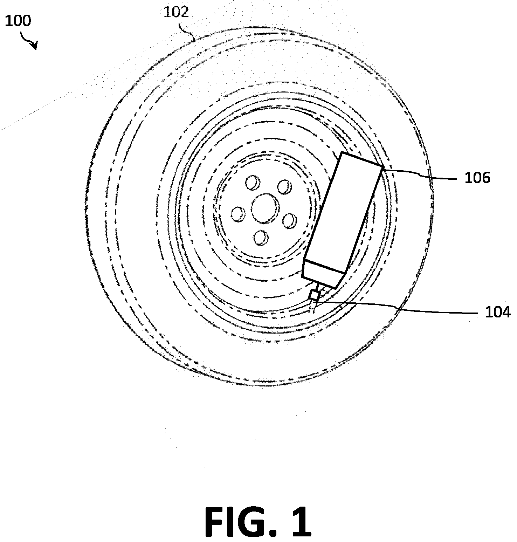

Figure 1 illustrates a tire repair system 100 in accordance with an aspect of this disclosure. As illustrated, the tire repair system 100 includes a tire repair aerosol canister 106 that is used to seal a tire 102, such as an automobile tire. In the illustrated example, the tire repair aerosol canister 106 can be coupled to the tire 102 via the valve stem 104 of the tire 102 without requiring removal of the valve core. As illustrated, the tire repair aerosol canister 106 can be coupled to valve stem 104 directly, however, in some examples, the tire repair aerosol canister 106 can be coupled to the valve stem 104 via a flexible hose. In either case, the tire repair aerosol canister 106 injects a tire-sealing agent into the tire 102 from within the tire repair aerosol canister 106 to repair the tire 102.

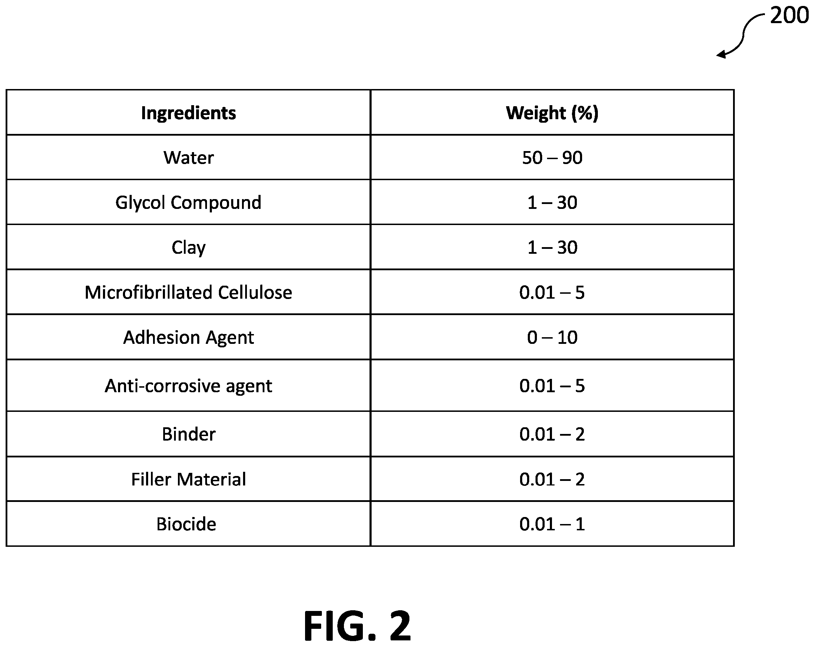

Figure 2 illustrates a table of ingredients for a tire-sealing agent 200 in accordance with an aspect of this disclosure. As illustrated, a weight percentage (%) is provided for each ingredients, which is the ratio of the ingredient to the total weight of the tire-sealing agent 200.

In the illustrated example, the tire-sealing agent 200 may comprise between approximately 50% and approximately 90% by weight water, between approximately 1% and 20% by weight of a glycol compound, between approximately 1% and approximately 30% clay, between approximately 0.01% and approximately 5% microfibrillated cellulose, between approximately 0% and approximately 10% of an adhesion agent, between approximately 0.01% and approximately 5% of an anti-corrosive agent, between approximately 0.01% and approximately 2% of a binder, between approximately 0.01% and approximately 2% of a filler material, and between approximately 0.01% and 1% of a biocide.

According to the invention, the tire-sealing agent may comprises water wherein the ratio of the water to a total weight of the tire-sealing agent is 50% to 90% by weight. In some examples, the water can be deionized ("DI") water. In some examples, the tire-sealing agent may comprise between approximately 55% and approximately 90%, between approximately 60% and approximately 90%, between approximately 65% and approximately 90%, or between approximately 70% and approximately 90% by weight of water. In some examples, the tire-sealing agent may comprise between approximately 70% and approximately 85%, between approximately 72% and approximately 85%, between approximately 74% and approximately 85%, between approximately 76% and approximately 85%, between approximately 78% and approximately 85%, and between approximately 80% and approximately 85% by weight of water.

In accordance with an aspect of the disclosure, as described above, the tire-sealing agent may comprise a glycol compound. The glycol compound can be incorporated in order to provide a lower temperature freezing point and flow point. Various types of glycol compounds can be used in accordance with the present disclosure. For example, in some aspects, the glycol compound can include glycerin, ethylene glycol, propylene glycol, or combinations thereof. In certain aspects, the glycol compound is glycerin. Therefore, in certain aspects, the tire-sealing agent may comprise multiple glycol compounds.

In some examples, the tire-sealing agent may comprise between approximately 1% and approximately 20%, between approximately 5% and approximately 20%, between approximately 10% and approximately 20%, or between approximately 15% and approximately 20% by weight of the glycol compound. In some examples, the tire-sealing agent may comprise between approximately 2% and approximately 10% of a glycol compound, between approximately 4% and approximately 10%, between approximately 6% and approximately 10%, or between approximately 8% and approximately 10% by weight of the glycol compound.

In accordance with an aspect of the disclosure, as described above, the tire-sealing agent may comprise clay. In some examples, the clay may act as a thickening agent. Various types of colloidal or gelling grade clay can be used in accordance with the disclosure. In some cases, the clay may be ultra-fine clay (e.g., a clay that is a micronized powder fine enough to leave less than 1.0% residue on +325 mesh wet). While a degree of water adsorption is required, both swelling and non-swelling clays may be used. Hence, in some examples, the clay can be selected from Attapulgite clay, Bentonite clay, or Hectorite clay.

In some examples, the tire-sealing agent may comprise between approximately 1% and approximately 30%, between approximately 5% and approximately 30%, between approximately 10% and approximately 30%, between approximately 15% and approximately 30%, between approximately 20% and approximately 30%, or between approximately 25% and approximately 30% by weight of clay. In some examples, the tire-sealing agent may comprise between approximately 5% and approximately 15% by weight of clay, between approximately 7% and approximately 15%, between approximately 9% and approximately 15%, between approximately 11% and approximately 15%, or approximately 13% and approximately 15% by weight of clay.

In accordance with an aspect of the disclosure, as described above, the tire-sealing agent may comprise a fiber that may provide a three dimensional network of fibrils that allow platelet clay fibers to fill any gaps and prevent any air from leaving the tire. For example, in certain aspects the fiber may be an environmentally friendly fiber, such as microfibrillated cellulose. In some examples, the tire-sealing agent may comprise between approximately 0.01% and approximately 5%, between approximately 0.1% and approximately 5%, between approximately 0.5% and approximately 5%, between approximately 1% and approximately 5%, between approximately 2% and approximately 5%, or between approximately 4% and approximately 5% by weight of microfibrillated cellulose. In some examples, the tire-sealing agent comprises up to or less than approximately 2% by weight of microfibrillated cellulose. For example, in some aspects, the tire-sealing agent may comprise between approximately 0.01% and approximately 2%, between approximately 0.1% and approximately 2%, between approximately 0.5% and approximately 2%, between approximately 1% and approximately 2%, or between approximately 1.5% and approximately 2% by weight of microfibrillated cellulose. In some examples, the tire-sealing agent comprises up to or less than approximately 1% by weight of microfibrillated cellulose. For example, in some aspects, the tire-sealing agent may comprise between approximately 0.01% and approximately 1%, between approximately 0.1% and approximately 1%, between approximately 0.3% and approximately 1%, between approximately 0.5% and approximately 1%, or between approximately 0.8% and approximately 1% by weight of microfibrillated cellulose. In some examples, the tire-sealing agent may comprise between approximately 0.35% and approximately 0.5% by weight of microfibrillated cellulose.

In accordance with an aspect, the ratio of clay to fiber may range from 10:1 to 30:1. For example, the ratio of clay to fiber can be 10:1, 15:1, 20:1, 25:1, or 30:1.

In accordance with an aspect of the disclosure, as described above, the tire-sealing agent may comprise an adhesion agent. Various types of adhesion agents can be used in accordance with the disclosure. For example, the adhesion agent can be selected from various resin adhesion agents. For example, terpene resin or phenolic resin dispersions can be used. Other types of resin adhesion agents that can be used include modified aliphatic hydrocarbon resin dispersions. In further examples, the adhesion agent can be selected from polyvinyl esters, polyvinyl alcohols, polyurethane dispersions, or polyvinyl pyrrolidines.

In some examples, the tire-sealing agent may comprise up to or less than 10% by weight of an adhesion agent. For example, the tire-sealing agent may comprise between approximately 0% and approximately 10%, between approximately 2% and approximately 10%, between approximately 4% and approximately 10%, between approximately 6% and approximately 10%, or between approximately 8% and approximately 10% by weight of the adhesion agent. In other aspects, the tire-sealing agent may comprise up to or less than approximately 5%, up to or less than approximately 4%, up to or less than approximately 3%, up to or less than approximately 2%, or up to or less than approximately 1% by weight of the adhesion agent.

In accordance with an aspect of the disclosure, as described above, the tire-sealing agent may comprise one or more anti-corrosive agents. In certain examples, the tire-sealing agent may comprise a single anti-corrosive agent. In other examples, the tire-sealing agent may comprise multiple anti-corrosive agents. Various types of anti-corrosive agents can be used in accordance with the disclosure. For example, the anti-corrosive agent (also referred to as a corrosion inhibitor) can be a phosphate ester. In further examples, the corrosion inhibitor can be 2-mercaptobenzothiazol, ammonium borate, or an aminocarboxylate.

In some examples, the tire-sealing agent may comprise between approximately 0.01% and approximately 5%, between approximately 0.1% and approximately 5%, between approximately 0.5% and approximately 5%, between approximately 1% and approximately 5%, between approximately 2% and approximately 5%, or between approximately 4% and approximately 5% by weight of the anti-corrosive agent. In some examples, the tire-sealing agent may comprise between approximately 0.1% and approximately 2%, between approximately 0.5% and approximately 2%, between approximately 1% and approximately 2%, or between approximately 1.5% and approximately 2% by weight of the anti-corrosive agent.

In accordance with an aspect of the disclosure, as described above, the tire-sealing agent may comprise a binder. The binder may provide enhanced physical stability to the tire-sealing agent. While the binder may also act as a thickening agent, the binder is able to provide enhanced physical stability without significantly increasing the viscosity of the tire-sealing agent. Various types of binders can be used in accordance with the disclosure. In some examples, carboxymethyl cellulose can be used as a binder. In other examples, the binder can be selected from other cellulose derivatives such as hydroxyethyl cellulose, hydroxypropyl cellulose, or other derivatives thereof. In other examples, the binder may be a hydrophilic colloid. In further examples, the binder can be a natural gum such as Xanthan gum. In further examples, synthetic materials such as alkali swellable emulsions ("ASE") can be used as a suspension aid or a binder.

In some examples, the tire-sealing agent may comprise between approximately 0.1% and approximately 2%, between approximately 2%, between approximately 0.5% and approximately 2%, between approximately 1% and approximately 2%, or between approximately 1.5% and approximately 2% by weight of the binder. In some examples, the tire-sealing agent may comprise between approximately 0.1% and approximately 1%, between approximately 0.3% and approximately 1%, between approximately 0.5% and approximately 1%, or between approximately 0.7% and approximately 1% by weight of the binder. In further examples, the tire-sealing agent may comprise approximately 0.5% or less by weight of the binder. For example, the tire-sealing agent may comprise between approximately 0.3% and approximately 0.5%, between approximately 0.35% and approximately 0.5%, between approximately 0.4% and approximately 0.5%, or between approximately 0.45% and approximately 0.5% by weight of the binder.

In accordance with an aspect of the disclosure, as described above, the tire-sealing agent may comprise a filler material. In some examples, the filler material can be a cellulose-based fiber material. In further examples, the filler material may be a powder such as talc, calcium carbonate, or silica.

In some examples, the tire-sealing agent may comprise up to or less than approximately 2% by weight of the filler material. For example, the tire-sealing agent may comprise between approximately 0.01% and approximately 2%, between approximately 0.1% and approximately 2%, between approximately 0.5% and approximately 2%, between approximately 1% and approximately 2%, or between approximately 1.5% and approximately 2% by weight of the filler material. In some examples, the tire-sealing agent may comprise between approximately 0.1% and approximately 1%, between approximately 0.3% and approximately 1%, between approximately 0.5% and approximately 1%, or between approximately 0.7% and approximately 1% by weight of the filler material. In some examples, the tire-sealing agent may comprise approximately 0.25% by weight of the filler material.

In accordance with an aspect of the disclosure, as described above, the tire-sealing agent may comprise a preservative to protect against the effects of heat, light, and oxidation that may occur over time. In some examples, the preservative can be a biocide, such as Mergal^{®} K10N.

In some examples, the tire-sealing agent may comprise up to or less than approximately 1% by weight of the preservative. For example, the tire-sealing agent may comprise between approximately 0.01% and approximately 1%, between approximately 0.1% and approximately 1%, between approximately 0.5% and approximately 1%, or between approximately 0.8% and approximately 1% by weight of the preservative. In some examples the tire-sealing agent may comprise up to or less than approximately 0.25% by weight of the biocide. For example, the tire-sealing agent may comprise between approximately 0.01% and approximately 0.25%, between approximately 0.05% and approximately 0.25%, between approximately 0.1% and approximately 0.25%, between approximately 0.15% and approximately 0.25%, or between approximately 0.2% and approximately 0.25% by weight of the preservative.

## Claims

1. A tire-sealing agent comprising:
water, wherein a ratio of the water to a total weight of the tire-sealing agent is 50% to 90% by weight;
a glycol compound wherein a ratio of the glycol compound to the total weight of the tire-sealing agent is 1% to 30% by weight;
clay, wherein a ratio of the clay to the total weight of the tire-sealing agent is 1% to 30% by weight;
microfibrillated cellulose, wherein a ratio of the microfibrillated cellulose to the total weight of the tire-sealing agent is 0.01% and 2% by weight; and
a binder, wherein a ratio of the binder to the total weight of the tire-sealing agent is 0.01% to 2% by weight,
wherein the tire-sealing agent is free from rubber latex.

2. The tire-sealing agent of claim 1, further comprising an adhesion agent, preferably wherein the tire-sealing agent comprises between 0.01% and 10% by weight of the adhesion agent, and preferably wherein the adhesion agent is selected from a group consisting of: a terpene resin dispersion; a phenolic resin dispersion; a modified aliphatic hydrocarbon resin dispersion; a polyvinyl ester; a polyvinyl alcohol; and a polyvinyl pyrrolidine.

3. The tire-sealing agent of claim 1 or claim 2, further comprising an anti-corrosive agent, preferably wherein the tire-sealing agent comprises between 0.01% and 5% by weight of the anti-corrosive agent.

4. The tire-sealing agent of any preceding claim, further comprising a filler material, preferably wherein the tire-sealing agent comprises between 0.01% and 2% by weight of the filler material.

5. The tire-sealing agent of any preceding claim, further comprising a biocide, preferably wherein the tire-sealing agent comprises between 0.01% and 1% by weight of the biocide.

6. The tire-sealing agent of any preceding claim, wherein the glycol compound is selected from a group consisting of: glycerin; ethylene glycol; and propylene glycol.

7. The tire-sealing agent of any preceding claim, wherein the glycol compound is glycerin.

8. The tire-sealing agent of any preceding claim, wherein the clay is selected from a group consisting of: Attapulgite clay; Bentonite clay; or Hectorite clay.

9. The tire-sealing agent of any preceding claim, wherein the binder is selected from a group consisting of: carboxymethyl cellulose; hydroxyethyl cellulose; hydroxyl propyl cellulose; Xanthan gum; Guar gum; and an alkali swellable emulsion ("ASE").

10. The tire-sealing agent of claim 3, wherein the anti-corrosive agent is selected from a group consisting of: a phosphate ester and 2-mercaptobenzothiazol.

## Patentansprüche

1. Reifendichtungsmittel, aufweisend:
Wasser, wobei ein Verhältnis des Wassers zu einem Gesamtgewicht des Reifendichtungsmittels 50 Gew.-% bis 90 Gew.-% beträgt;
eine Glykolverbindung, wobei ein Verhältnis der Glykolverbindung zum Gesamtgewicht des Reifendichtungsmittels 1 Gew.-% bis 30 Gew.-% beträgt;
Ton, wobei ein Verhältnis des Tons zum Gesamtgewicht des Reifendichtungsmittels 1 Gew.-% bis 30 Gew.-% beträgt;
mikrofibrillierte Cellulose, wobei ein Verhältnis der mikrofibrillierten Cellulose zum Gesamtgewicht des Reifendichtungsmittels 0,01 Gew.-% bis 2 Gew.-% beträgt; und
ein Bindemittel, wobei ein Verhältnis des Bindemittels zum Gesamtgewicht des Reifendichtungsmittels 0,01 Gew.-% bis 2 Gew.-% beträgt,
wobei das Reifendichtungsmittel keinen Kautschuklatex enthält.

2. Reifendichtungsmittel nach Anspruch 1, ferner aufweisend ein Haftmittel, wobei das Reifendichtungsmittel vorzugsweise zwischen 0,01 Gew.-% und 10 Gew.-% des Haftmittels aufweist, und wobei das Haftmittel vorzugsweise ausgewählt ist aus einer Gruppe bestehend aus: einer Terpenharzdispersion; einer Phenolharzdispersion; einer Dispersion aus modifizierten aliphatischen Kohlenwasserstoffharzen; einem Polyvinylester; einem Polyvinylalkohol und einem Polyvinylpyrrolidon.

3. Reifendichtungsmittel nach Anspruch 1 oder Anspruch 2, das ferner ein Korrosionsschutzmittel aufweist, wobei das Reifendichtungsmittel vorzugsweise zwischen 0,01 Gew.-% und 5 Gew.-% des Korrosionsschutzmittels aufweist.

4. Reifendichtungsmittel nach einem der vorhergehenden Ansprüche, das ferner ein Füllmaterial aufweist, wobei das Reifendichtungsmittel vorzugsweise zwischen 0,01 Gew.-% und 2 Gew.-% des Füllmaterials aufweist.

5. Reifendichtungsmittel nach einem der vorhergehenden Ansprüche, das ferner ein Biozid aufweist, wobei das Reifendichtungsmittel vorzugsweise zwischen 0,01 Gew.-% und 1 Gew.-% des Biozids aufweist.

6. Reifendichtungsmittel nach einem der vorhergehenden Ansprüche, wobei die Glykolverbindung ausgewählt ist aus einer Gruppe bestehend aus: Glycerin, Ethylenglykol und Propylenglykol.

7. Reifendichtungsmittel nach einem der vorhergehenden Ansprüche, wobei die Glykolverbindung Glycerin ist.

8. Reifendichtungsmittel nach einem der vorhergehenden Ansprüche, wobei der Ton aus einer Gruppe ausgewählt ist, die aus Folgendem besteht: Attapulgit-Ton; Bentonit-Ton oder Hectorit-Ton.

9. Reifendichtungsmittel nach einem der vorhergehenden Ansprüche, wobei das Bindemittel ausgewählt ist aus einer Gruppe bestehend aus: Carboxymethylcellulose, Hydroxyethylcellulose, Hydroxylpropylcellulose, Xanthan, Guarkernmehl und einer alkaliquellbaren Emulsion ("ASE").

10. Reifendichtungsmittel nach Anspruch 3, wobei das Korrosionsschutzmittel ausgewählt ist aus einer Gruppe bestehend aus: einem Phosphatester und 2-Mercaptobenzothiazol.

## Revendications

1. Agent d'étanchéité pour pneu comprenant :
de l'eau, dans lequel le rapport entre l'eau et le poids total de l'agent d'étanchéité pour pneu est de 50 % à 90 % en poids ;
un composé glycol, dans lequel le rapport du composé glycol au poids total de l'agent d'étanchéité pour pneu est de 1 % à 30 % en poids ;
de l'argile, dans lequel le rapport de l'argile au poids total de l'agent d'étanchéité pour pneu est de 1 % à 30 % en poids ;
de la cellulose microfibrillée, dans laquelle le rapport de la cellulose microfibrillée au poids total de l'agent d'étanchéité pour pneu est de 0,01 % et 2 % en poids ; et
un liant, dans lequel le rapport du liant au poids total de l'agent d'étanchéité pour pneu est de 0,01 % à 2 % en poids,
dans lequel l'agent d'étanchéité pour pneu est exempt de latex de caoutchouc.

2. Agent d'étanchéité pour pneu selon la revendication 1, comprenant en outre un agent d'adhésion, de préférence dans lequel l'agent d'étanchéité pour pneu comprend entre 0,01 % et 10 % en poids de l'agent d'adhésion, et de préférence dans lequel l'agent d'adhésion est choisi dans un groupe constitué de : une dispersion de résine terpénique ; une dispersion de résine phénolique ; une dispersion de résine hydrocarbonée aliphatique modifiée ; un ester polyvinylique ; un alcool polyvinylique ; et une polyvinylpyrrolidine.

3. Agent d'étanchéité pour pneu selon la revendication 1 ou la revendication 2, comprenant en outre un agent anticorrosif, de préférence dans lequel l'agent d'étanchéité pour pneu comprend entre 0,01 % et 5 % en poids de l'agent anticorrosif.

4. Agent d'étanchéité pour pneu selon l'une quelconque des revendications précédentes, comprenant en outre un matériau d'apport, de préférence dans lequel l'agent d'étanchéité pour pneu comprend entre 0,01 % et 2 % en poids du matériau d'apport.

5. Agent d'étanchéité pour pneu selon l'une quelconque des revendications précédentes, comprenant en outre un biocide, de préférence dans lequel l'agent d'étanchéité pour pneu comprend entre 0,01 % et 1 % en poids du biocide.

6. Agent d'étanchéité pour pneu selon l'une quelconque des revendications précédentes, dans lequel le composé glycol est choisi dans un groupe constitué de : la glycérine ; l'éthylèneglycol ; et le propylèneglycol.

7. Agent d'étanchéité pour pneu selon l'une quelconque des revendications précédentes, dans lequel le composé glycol est la glycérine.

8. Agent d'étanchéité pour pneu selon l'une quelconque des revendications précédentes, dans lequel l'argile est choisie dans un groupe constitué de : l'argile attapulgite ; l'argile bentonite ; ou l'argile hectorite.

9. Agent d'étanchéité pour pneu selon l'une quelconque des revendications précédentes, dans lequel le liant est choisi dans le groupe constitué de : la carboxyméthylcellulose ; l'hydroxyéthylcellulose ; l'hydroxypropylcellulose ; la gomme de xanthane ; la gomme de guar ; et une émulsion gonflable aux alcalis (« ASE »).

10. Agent d'étanchéité pour pneu selon la revendication 3, dans lequel l'agent anticorrosif est choisi dans un groupe constitué de : un ester de phosphate et le 2-mercaptobenzothiazol.
